# EUROPÄISCHE PATENTSCHRIFT

(11) **EP 3 325 826 B1**
(45) Veröffentlichungstag und Bekanntmachung des Hinweises auf die Patenterteilung: **09.09.2020**
(21) Anmeldenummer: 16738399.1
(22) Anmeldetag: 08.07.2016
(51) Int. Cl.: F16B 37/04, F16B 2/24, F16B 21/07, F16B 5/06

(54) **BEFESTIGUNGSANORDNUNG, CLIPKÖRPER UND CLIP**
ATTACHMENT ARRANGEMENT, CLIP BODY AND CLIP
SYSTÈME DE FIXATION, CORPS DE CLIP ET CLIP

(30) Priorität: 24.07.2015 DE 102015009644
(43) Veröffentlichungstag der Anmeldung: 30.05.2018
(73) Patentinhaber: SFS Intec Holding AG, 9435 Heerbrugg (CH)
(72) Erfinder: COSTABEL, Sascha, 71083 Herrenberg (DE)
(86) Internationale Anmeldenummer: PCT/EP2016/066244
(87) Internationale Veröffentlichungsnummer: WO 2017/016844

(56) Entgegenhaltungen:
- DE-U1- 8 809 756
- DE-U1-202006 014 151
- US-A- 2 115 312
- US-A- 2 196 312
- US-A- 2 258 845
- US-A- 2 346 712

## Beschreibung

Die Erfindung betrifft eine Befestigungsanordnung mit einem Clipkörper, einer Befestigungseinrichtung und einer Platte, wobei der Clipkörper eine Halterung für die Befestigungseinrichtung aufweist, wobei der Clipkörper an der mit mindestens einer Befestigungsöffnung versehenen Platte befestigbar ist, wobei die Platte zusätzlich zu der Befestigungsöffnung eine Positionieröffnung aufweist, so dass durch einen Anschlag mindestens eines Positionierelementes an einem Rand der Positionieröffnung eine Positionierung des Clipkörpers an der Platte erfolgt, wobei die Positionieröffnung eine solche Größe hat, die ein zumindest teilweises Hindurchführen des Clipkörpers mit daran gehalterter Befestigungseinrichtung erlaubt, wobei das Positionierelement zumindest teilweise an dem Rand der Positionieröffnung anliegt und wobei das Positionierelement gleichzeitig ein Arretierelement oder mit einem solchen verbunden ist, das die Platte an einer der Halterung abgewandten Seite kontaktiert. Weiterhin betrifft die Erfindung einen Clipkörper und einen Clip.

Die US 2,115,312 zeigt einen Clip-Befestiger mit einem klammerförmigen Aufbau mit einer Basis und einer Zunge, wobei an der Zunge eine Mutter als Befestigungseinrichtung befestigt ist. Der Befestiger wird so ausgelegt, dass bei einem plattenförmigen Bauteil mit zwei Öffnungen die Basis durch eine der beiden Öffnung A eingefädelt werden kann und durch die Klammerwirkung danach an beiden Seiten des Bauteils anliegt. Ein Teil des Clips überdeckt bzw. umgibt die zweite Öffnung.

Dokument US 2,258,845 ist in Aufbau und Einsatz sehr ähnlich. Die Befestigungseinrichtung ist als integrales Bauteil eines der beiden Schenkel realisiert. Bei ungenauem Setzen eines Befestigers kann der Schenkel verbogen werden.

Weitere Beispiele von Clips, die zur Befestigung an und von Platten dienen, sind beschrieben in DE 20 2006 014 151 U1, US 6,918,725 B2, und US 6,474,917 B2.

Den Clips der letztgenannten Veröffentlichungen ist gemeinsam, dass sie zwei Schenkel aufweisen, von denen einer auf der einen Seite der Platte und der andere auf der anderen Seite der Platte angeordnet wird. Zu diesem Zweck wird der Clip auf einen Rand der Platte aufgesteckt. Axiale Kräfte, das heißt Kräfte die senkrecht oder nahezu senkrecht zu der Platte wirken, müssen durch die Federkraft der beiden miteinander verbundenen Schenkel aufgenommen werden. Je nach Ausführungsform des Clips ist eine Positionierung des Clips über der Befestigungsöffnung mit dem Auge des Monteurs zu kontrollieren. Der Schenkel auf der einen Seite der Platte kann beim Einbringen einer Befestigungseinrichtung wegbiegen, so dass der Clip seine Position verliert und die Verbindung mit der zweiten Platte nicht mehr möglich ist.

Es ist eine Aufgabe der Erfindung, eine Befestigungsanordnung, einen Clipkörper und einen Clip zur Verfügung zu stellen, um im Bereich von Befestigungsöffnungen arbeiten zu können, welche nicht unbedingt randnah an einer Platte angeordnet sind und die eine zuverlässige und praktische Positionierung des Clips an der Platte ermöglichen, wobei die Befestigungsanordnung mit ausreichender Stabilität ausgestattet sein soll.

Diese Aufgabe wird mit den Merkmalen des unabhängigen Anspruches gelöst. Vorteilhafte Ausgestaltungen der Erfindung sind in den abhängigen Ansprüchen angegeben.

Die Erfindung baut auf der gattungsgemäßen Befestigungsanordnung dadurch auf, dass das Arretierelement der Halterung gegenüberliegend angeordnet ist. Hierdurch ergibt sich eine praktische Lösung zum Herstellen einer Befestigungsanordnung. Der Clipkörper kann ohne besondere optische Kontrolle durch die Positionieröffnung der Platte hindurchgeführt werden. Sobald der Clipkörper seine Endposition erreicht hat, stützt sich das Positionierelement des Clipkörpers am Rand der Positionieröffnung ab, so dass sich der Clipkörper nicht mehr ungewollt in seiner Lage verändert. Ferner weist der Clipkörper mindestens eine Rippe als Versteifungselement auf, die dem Clipkörper beim Komplettieren der Befestigungseinrichtung zusätzliche Stabilität verleiht, indem sie seine Anlage an der Platte aufrechterhält.

Die Erfindung besteht in einer Befestigungsanordnung mit einem Clipkörper, einer Befestigungseinrichtung und einer Platte, wobei der Clipkörper eine Halterung für die Befestigungseinrichtung aufweist, wobei der Clipkörper an der mit mindestens einer Befestigungsöffnung versehenen Platte befestigbar ist, wobei die Platte zusätzlich zu der Befestigungsöffnung eine Positionieröffnung aufweist, so dass durch einen Anschlag mindestens eines Positionierelementes an einem Rand der Positionieröffnung eine Positionierung des Clipkörpers an der Platte erfolgt, wobei die Positionieröffnung eine solche Größe hat, die ein zumindest teilweises Hindurchführen des Clipkörpers mit daran gehalterter Befestigungseinrichtung erlaubt, wobei das Positionierelement zumindest teilweise an dem Rand der Positionieröffnung anliegt und wobei das Positionierelement gleichzeitig ein Arretierelement oder mit einem solchen verbunden ist, das die Platte an einer der Halterung abgewandten Seite kontaktiert. Es ist vorgesehen, dass das Arretierelement der Halterung gegenüberliegend angeordnet ist.

Hierdurch erhält der Clipkörper eine Stabilisierung in axialer Richtung. Während Clipkörper des Standes der Technik im Bereich der Befestigungsanordnung nur dadurch axial stabilisiert werden, dass die Befestigungseinrichtung komplettiert wird, ist dies bei dem vorliegenden Clipkörper anders. Hier ist bereits eine axiale Stabilisierung in dem Moment gegeben, in dem der Clipkörper in die Platte eingesetzt ist. Dies erleichtert die Arbeit am Objekt und auch für die fertiggestellte Befestigungsanordnung wird durch das Arretierelement eine zusätzliche Stabilität zur Verfügung gestellt. Sobald der Clipkörper in die Platte eingesetzt ist und seine Endposition erreicht hat, ist die Positionieröffnung vollständig vom Clipkörper abgedeckt. Dies erleichtert die Arbeit am Objekt, insbesondere das Anbringen von Feuerschutzklebestreifen auf der Platte an einer der Halterung abgewandten Seite.

Es ist besonders bevorzugt, dass die Platte im Innenbereich eines Fahrzeugs oder Flugzeugs angeordnet ist.

Die Erfindung betrifft weiterhin einen Clipkörper für eine Befestigungsanordnung, wie vorstehend beschrieben.

Nützlicherweise ist vorgesehen, dass das Arretierelement mindestens eine Zunge aufweist.

Es ist ferner vorgesehen, dass der Clipkörper mindestens eine Rippe als Versteifungselement aufweist. Versteifungselemente, helfen dabei, dem Clipkörper eine zusätzliche Stabilität zu verleihen, so dass dieser insbesondere beim Komplettieren der Befestigungseinrichtung seine Anlage an der Platte aufrechterhält.

Nützlicherweise ist vorgesehen, dass der Clipkörper aus einem isolierenden Material und/oder einem Material hergestellt ist, das Kontaktkorrosion verhindert. Da die Clipkörper zur Herstellung einer Befestigungsanordnung in verschiedenen Umgebungen eingesetzt werden, sollte auf die Vermeidung von Korrosionsbildung unter allen Umständen geachtet werden. Gerade die Bereiche, in denen Befestigungsanordnungen vorgesehen sind, sind besonderen mechanischen Belastungen ausgesetzt, so dass eine Schwächung durch Korrosion in diesen Bereichen nicht akzeptabel ist, insbesondere, wenn es um sicherheitsrelevante Bereiche geht, wie sie in der Kraftfahrzeug- und Luft- und Raumfahrttechnik häufig anzufinden sind.

In diesem Zusammenhang kann es sinnvoll sein, dass der Clipkörper aus Kunststoff besteht.

Weiterhin ist es auch in diesem Zusammenhang nützlich, dass an dem Clipkörper mindestens ein Dichtungselement angebracht ist. Dichtungselemente können ferner dafür sorgen, dass verschiedene Seiten der miteinander in Verbindung gebrachten Platten gasdicht und/oder flüssigkeitsdicht voneinander getrennt werden können.

Die Erfindung betrifft weiterhin einen Clip mit einem Clipkörper, wie vorstehend ausgeführt, und mit einer Befestigungseinrichtung.

Nützlicherweise ist vorgesehen, dass die Befestigungseinrichtung zumindest teilweise bolzenartig ist.

Besondere Ausführungsformen des Clips sind der Weise weitergebildet,
- dass die Befestigungseinrichtung einen Haltenocken und einen Pin umfasst,
- dass die Befestigungseinrichtung eine Mutter und eine Schraube umfasst,
- dass die Befestigungseinrichtung einen Federclip und einen Pin umfasst, oder
- dass die Befestigungseinrichtung eine Kegelmutter und eine Schraube umfasst.

Gemäß einer besonders bevorzugten Ausführungsform des erfindungsgemäßen Clips ist vorgesehen, dass die Befestigungseinrichtung in der Halterung in mindestens einer Richtung parallel zu der Platte mit Spiel gehalten ist. Durch das Spiel der Befestigungseinrichtung in der Halterung wird der gesamten Befestigungsanordnung eine ausreichende Toleranzfähigkeit zuteil, so dass der Clip auch für Aufgaben eingesetzt werden kann, bei denen von vornherein eine gewisse Toleranz erforderlich ist.

Die Erfindung wird nun mit Bezug auf die begleitenden Zeichnungen anhand besonders bevorzugter Ausführungsformen beispielhaft erläutert.
- Figur 1: zeigt eine erste perspektivische Darstellung einer ersten Ausführungsform eines Clipkörpers.
- Figur 2: zeigt eine zweite perspektivische Darstellung der ersten Ausführungsform eines Clipkörpers.
- Figur 3: zeigt eine Platte mit einer Befestigungsöffnung und einer Positionieröffnung.
- Figur 4: zeigt die Platte gemäß Figur 3 mit darin angeordnetem Clipkörper.
- Figur 5: zeigt eine perspektivische Darstellung einer ersten Ausführungsform eines Clips.
- Figur 6: zeigt einen Schnitt durch eine Befestigungsanordnung mit einem Clip gemäß Figur 5.
- Figur 7: zeigt eine perspektivische Darstellung einer zweiten Ausführungsform eines Clips.
- Figur 8: zeigt einen Schnitt durch eine Befestigungsanordnung mit einem Clip gemäß Figur 7.
- Figur 9: zeigt eine perspektivische Darstellung einer dritten Ausführungsform eines Clips.
- Figur 10: zeigt einen Schnitt durch eine Befestigungsanordnung mit einem Clip gemäß Figur 9.
- Figur 11: zeigt eine perspektivische Darstellung einer vierten Ausführungsform eines Clips.
- Figur 12: zeigt einen Schnitt durch eine Befestigungsanordnung mit einem Clip gemäß Figur 11.
- Figur 13: zeigt eine erste perspektivische Darstellung eines Clipkörpers.
- Figur 14: zeigt eine zweite perspektivische Darstellung des Clipkörpers nach Figur 13 mit teilweise weggebrochenem Arretierelement.

Bei der nachfolgenden Beschreibung detaillierter Ausführungsformen der Erfindung bezeichnen gleiche Bezugszeichen gleiche oder vergleichbare Komponenten.

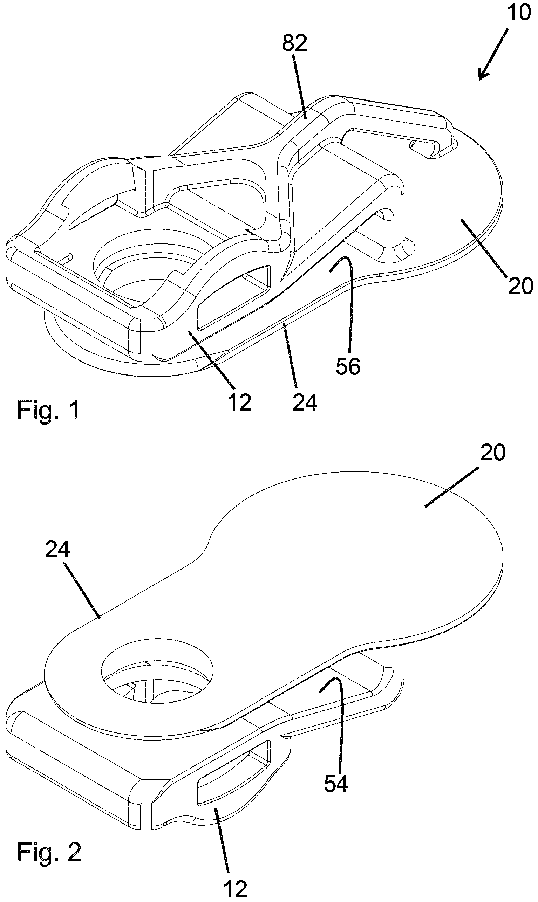

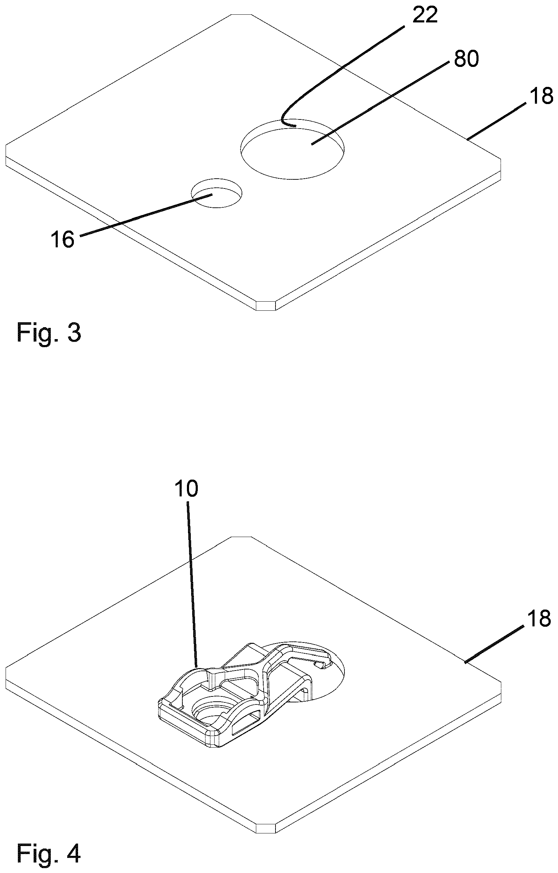

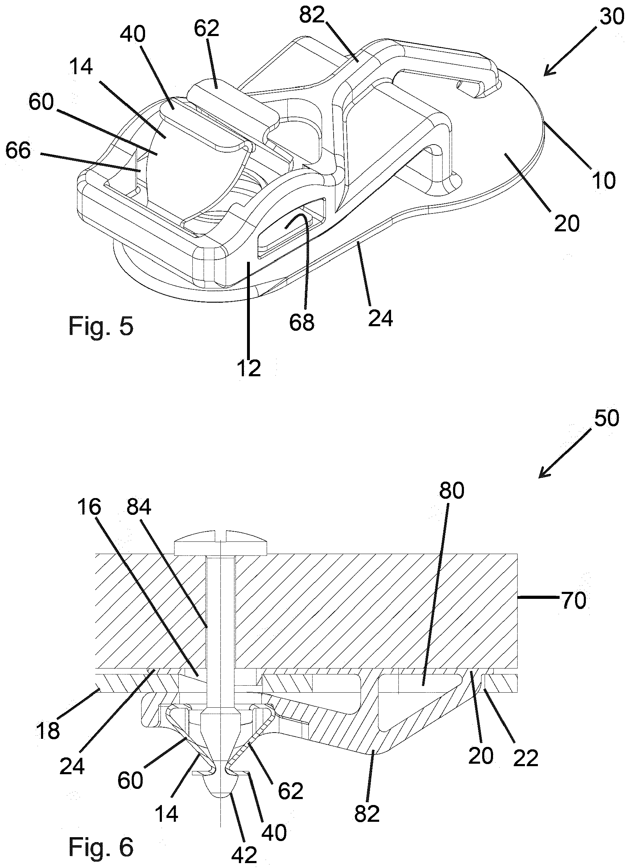

Figur 1 zeigt eine erste perspektivische Darstellung einer ersten Ausführungsform eines Clipkörpers 10. Figur 2 zeigt eine zweite perspektivische Darstellung der ersten Ausführungsform eines Clipkörpers 10. Figur 3 zeigt eine Platte 18 mit einer Befestigungsöffnung 16 und einer Positionieröffnung 80. Figur 4 zeigt die Platte 18 gemäß Figur 3 mit darin angeordnetem Clipkörper 10. Der Clipkörper 10 hat eine Halterung 12 für eine hier nicht dargestellte Befestigungseinrichtung. Befestigungseinrichtungen von verschiedener Art sind in den Figuren 5 bis 12 dargestellt und dort allgemein mit dem Bezugszeichen 14 gekennzeichnet. Weiterhin umfasst der Clipkörper 10 ein Positionierelement 20. Das hier gezeigte Positionierelement ist insbesondere für eine kreisförmige Positionieröffnung 80 in einer Platte 18 geeignet. Der Clipkörper mit gegebenenfalls daran befestigter Befestigungseinrichtung wird teilweise durch die Positionieröffnung 80 der Platte 18 hindurchgeführt. Dabei kommt eine Zunge 24 des Clipkörpers 10, die als Arretierelement dient, auf der einen Seite der Platte 18 zum Anliegen. Der Bereich des Clipkörpers 10, der die Halterung 12 trägt, liegt auf der anderen Seite der Platte 18 an. Zur Versteifung des Clipkörpers 10 sind Versteifungselemente 82 vorgesehen. Während die elastische Kraft, die von der Zunge 24 und der die Halterung 12 tragenden Gegenkomponente aufgebracht wird, eine Arretierung des Clipkörpers in axiale Richtung bewirkt, dient das Positionierelement 20 dazu, eine Verschiebung des Clipkörpers 10 parallel zur Platte 18 zu verhindern. Zu diesem Zweck liegt das Positionierelement 20 teilweise an dem Rand 22 der Positionieröffnung 80 an. Im vorliegenden Ausführungsbeispiel hat der Clipkörper 10 zwei Anlagebereiche 54, 56 für die Platte 18. Der erste Anlagebereich 54 kontaktiert die Platte auf der der Halterung zugewandten Seite. Dieser Anlagebereich 54 ist eine Unterseite des Clipkörpers 10, wenn dieser mit der Halterung auf der Oberseite der Platte 18 befestigt wird. Ein weiterer Anlagebereich 56 wird von der Oberseite der Zunge 24 definiert. Es ist ersichtlich, dass die Positionieröffnung 80 größer ist als die Befestigungsöffnung 16. Hierdurch wird ermöglicht, den Clipkörper ohne weiteres und bequem durch die Positionieröffnung 80 hindurchzuschieben, bei entsprechender Größe der Positionieröffnung 80 sogar mit an dem Clipkörper befestigter Befestigungseinrichtung, also als vollständigen Clip.

Figur 5 zeigt eine perspektivische Darstellung einer ersten Ausführungsform eines Clips. Figur 6 zeigt einen Schnitt durch eine Befestigungsanordnung mit einem Clip gemäß Figur 5. Am Beispiel des Clipkörpers 10 gemäß den Figuren 1 und 2 wird dessen Vervollständigung zum Clip 30 und dessen Zusammenwirken mit einer kompletten Befestigungsanordnung 50 erläutert. Der Clipkörper 10 ist mit einer Befestigungseinrichtung 14 ausgestattet, die im vorliegenden Fall als Federclip 40 realisiert ist. Der Federclip 40 umfasst zwei federnde Schenkel 60, 62, die über einen gelochten Verbindungsbereich verbunden sind. An dem Verbindungsbereich sind Zungen 66, 68 angeordnet, mit welchen der Federclip 40 in die Halterung 12 des Clipkörpers 10 eingreift und hierüber an dem Clipkörper 10 gehaltert wird. Je nach den Abmessungen der Halterung 12 und der Befestigungseinrichtung 14, insbesondere der Zungen 66, 68 an der Befestigungseinrichtung 14, wird die Befestigungseinrichtung 14 gekippt in die Halterung eingesetzt, wobei zuerst eine Zunge 66, 68 in einer Öffnung der Halterung 12 eingeführt wird. Danach wird die Befestigungseinrichtung 14 so bewegt, so dass der Verbindungsbereich parallel zum Clipkörper 10 ist. Durch Verschieben der Befestigungseinrichtung 14 in eine Symmetrieposition am Clipkörper 10 erreicht diese ihre Endposition. In einer alternativen Ausführungsform kann die Befestigungseinrichtung 14 in der Halterung 12 des Clipkörpers 10 angeordnet werden, indem sie zunächst, bezogen auf Ihre Endposition, um 90° verdreht in den Clipkörper 10 eingeführt wird. Durch ein Drehen des Clipkörpers um 90° in die Endposition gelangen die Zungen 66, 68 in die Öffnungen der Halterung 12, so dass dann der geforderte Halt gegeben ist. Beide Zungen 66, 68 liegen dann in der Halterung 12. Das Positionierelement 20 liegt dann am Rand 22 der Befestigungsöffnung 16 an. Obwohl eine Endposition durch eine symmetrische Anordnung der Befestigungseinrichtung 14 im Clipkörper 10 definiert ist, ist gleichwohl vorzugsweise ein gewisses Spiel vorhanden, so dass die Befestigungseinrichtung 14 in dem Clipkörper 10 hin- und herbewegt werden kann. Dieses Spiel sollte mindestens in einer Richtung parallel zu der Platte gegeben sein, vorzugsweise in alle Richtungen parallel zu der Platte. Im montierten Zustand des Clips untergreift dieser die Platte 18 mittels der Zunge 24. Die so hergestellte Anordnung aus Platte 18 und Clip 30 wird auf eine zweite Platte 70 aufgesetzt, so dass die Zunge 24 zwischen den Platten 18, 70 liegt. Ebenfalls liegt das Positionierelement 20 teilweise zwischen den Platten 18, 70, nämlich benachbart zur Positionieröffnung 80. Sodann wird durch die Öffnungen 16, 84 der Platten 18, 70 ein Pin 42 geführt. Dieser treibt mit einem verdickten Ende die Schenkel 60, 62 des Federclips auseinander. Seine Endposition hat der Pin 42 dann erreicht, wenn die Schenkel 60, 62 wieder zusammenfedern und in einen verjüngten Bereich unterhalb des verdickten Endes des Pins 42 gelangen. Der Pin 42 ist vorzugsweise in dem verjüngten Bereich unterhalb des verdickten Endes nicht rotationssymmetrisch, sondern er weist in einer Richtung senkrecht zur Betrachtungsebene der Figur 6 eine Dicke auf, die seinem verdickten Ende entspricht. Hierdurch ist es möglich, den Pin 42 wieder aus der Befestigungsanordnung zu entfernen. Indem der Pin 42 nämlich gedreht wird, treibt er die Schenkel 60, 62 des Federclips 40 wieder auseinander, so dass das verdickte Ende des Pins 42 keinen Halt mehr im Federclip 40 findet und herausgezogen werden kann.

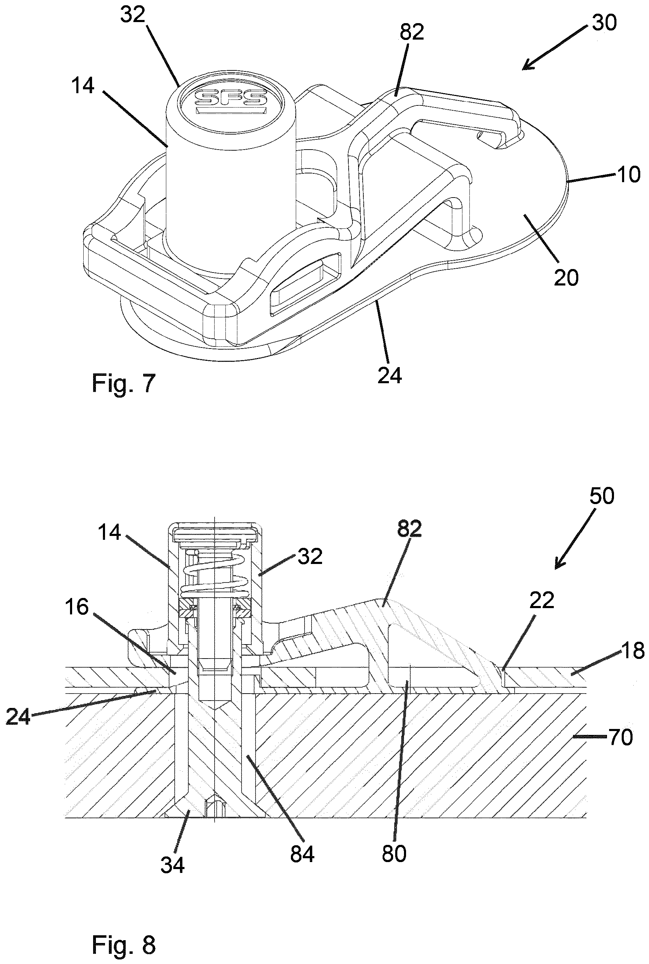

Figur 7 zeigt eine perspektivische Darstellung einer zweiten Ausführungsform eines Clips. Figur 8 zeigt einen Schnitt durch eine Befestigungsanordnung mit einem Clip gemäß Figur 7. Am baugleichen Clipkörper 10, wie im Zusammenhang mit den Figuren 5 und 6 beschrieben, ist eine andersartige Befestigungseinrichtung 14 angeordnet. Es handelt sich hier um einen Haltenocken 32, der mit einem Pin 34 zusammenwirken kann. Die Funktionsweise dieser Anordnung aus Haltenocken 32 und Pin 34 ist in DE 10 2007 959 148 B4 detailliert beschrieben.

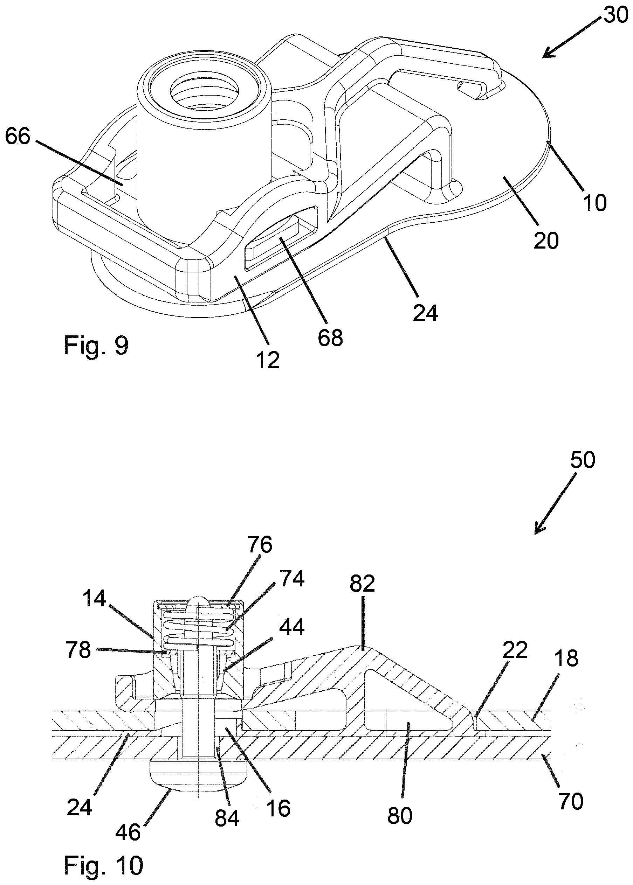

Figur 9 zeigt eine perspektivische Darstellung einer dritten Ausführungsform eines Clips. Figur 10 zeigt einen Schnitt durch eine Befestigungsanordnung mit einem Clip gemäß Figur 9. Wiederum am Beispiel desselben Clipkörpers 10, wie in den Figuren 5, 6, 7, 8 ist eine weitere Variante eines Clips 30 gezeigt. Dieser Clip 30 hat als Befestigungseinrichtung 14 eine Kegelmutter 44, die mit einer Schraube 46 zusammenwirkt. Die Kegelmutter 44 sitzt in einem Gehäuse, und sie wird durch eine Feder 74, die zwischen zwei Platten 76, 78 gespannt ist, in eine Endposition in einem Kegelsitz des Gehäuses getrieben. Wird ausgehend von dieser Endposition eine Schraube 46 in die Kegelmutter 44 hineingedrückt - hierbei muss die Schraube 46 nicht gedreht werden - , so weicht die Kegelmutter 44 unter Kompression der Feder 74 aus. Die Kegelmutter 44 ist so beschaffen, dass sich hierbei der Durchmesser ihres Innengewindes vergrößern kann. Die Schraube 46 kann somit in die Kegelmutter 44 eindringen. Hat die Schraube 46 ihre Endposition erreicht, so liegen die Gewindegänge der Schraube und der Kegelmutter 44 ineinander, so dass die Kegelmutter 44 wieder vollständig oder nahezu vollständig in ihrem Sitz innerhalb des Gehäuses angeordnet sein kann. Wenn man die Schraube 46 aus der Befestigungsanordnung 50 entfernen will, so lässt sich dies mittels Herausdrehen bewerkstelligen.

Bei einer anderen Ausführungsform ist es nicht erforderlich, eine Mutter und eine Schraube zu verwenden. Vielmehr kann an Stelle der Mutter 44 ein Gebilde verwendet werden, dass irgendwie im Innenbereich mit Rillen versehen ist. Entsprechende Rillen hat ein Stift. Das Hineingeben des Stiftes in das Gebilde erfolgt identisch, wie im Zusammenhang mit der Kegelmutter 44 und der Schraube 46 beschrieben. Allerdings ist ein Herausbewegen des Gebildes aus der Befestigungsanordnung dann nicht durch eine Drehbewegung möglich, wie es im Zusammenhang mit der Kegelmutter 44 und der Schraube 46 beschrieben wurde.

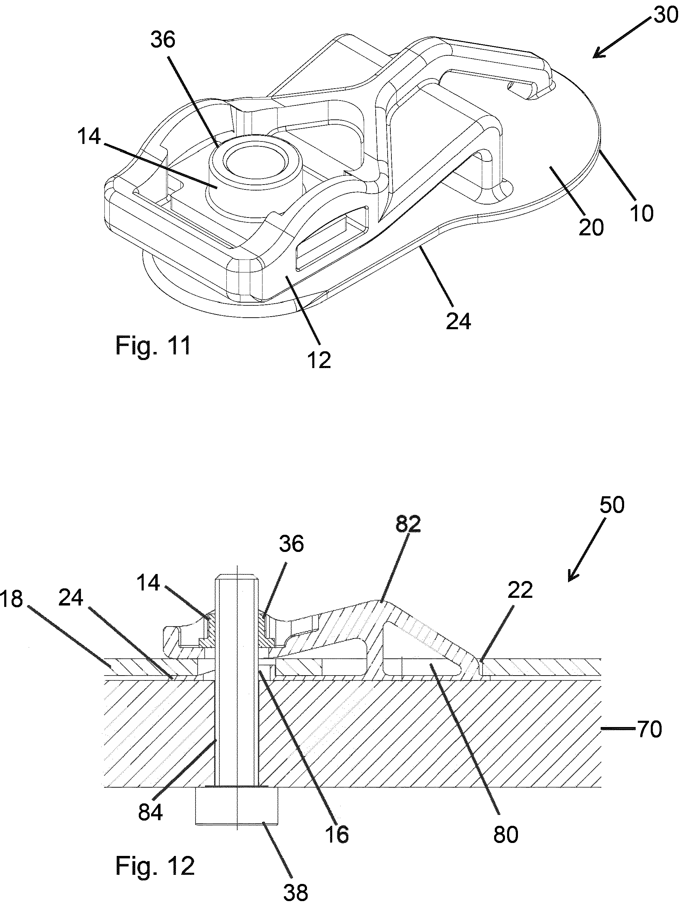

Figur 11 zeigt eine perspektivische Darstellung einer vierten Ausführungsform eines Clips. Figur 12 zeigt einen Schnitt durch eine Befestigungsanordnung mit einem Clip gemäß Figur 11. Der Clipkörper 10 ist wiederum identisch zu den Clipkörpern der Befestigungsanordnungen 50, die im Zusammenhang mit den Figuren 5, 6, 7, 8, 9, 10 beschrieben wurden. Die Befestigungseinrichtung 14 wird hier durch eine Mutter 36 gebildet, die mit einer Schraube 38 zusammenwirkt.

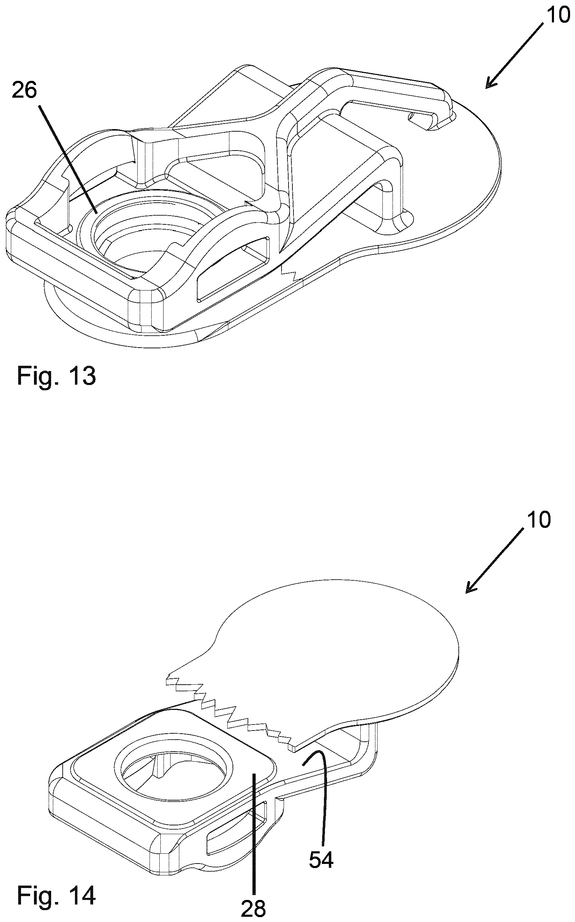

Figur 13 zeigt eine erste perspektivische Darstellung eines Clipkörpers. Figur 14 zeigt eine zweite perspektivische Darstellung des Clipkörpers nach Figur 13 mit teilweise weggebrochenem Arretierelement. An dem Anlagebereich 54 des Clipkörpers 10 ist eine Dichtung 28 angeordnet. Diese liegt also auf der Oberseite der hier nicht dargestellten Platte. Sie verhindert, je nach Materialien der beteiligten Komponenten Kontaktkorrosion. Weiterhin kann ein Bereich oberhalb der Befestigungsanordnung von einem Bereich unterhalb der Befestigungsanordnung gas- beziehungsweise flüssigkeitsdicht getrennt werden. Eine weitere Dichtung 26 ist dort angeordnet, wo die Befestigungseinrichtung 14 auf dem Clipkörper 10 aufsitzt. Hierdurch kann wiederum Kontaktkorrosion verhindert werden. Ebenfalls wird zur Abdichtung der verschiedenen Bereiche beigetragen.

### Bezugszeichenliste

- 10: Clipkörper
- 12: Halterung
- 14: Befestigungseinrichtung
- 16: Befestigungsöffnung
- 18: Platte
- 20: Positionierelement
- 22: Rand
- 24: Zunge
- 26: Dichtungselement
- 28: Dichtungselement
- 30: Clip
- 32: Haltenocken
- 34: Pin
- 36: Mutter
- 38: Schraube
- 40: Federclip
- 42: Pin
- 44: Kegelmutter
- 46: Schraube
- 50: Befestigungsanordnung
- 54: Anlagebereich
- 56: Anlagebereich
- 60: Schenkel
- 62: Schenkel
- 66: Zunge
- 68: Zunge
- 70: Platte
- 74: Feder
- 76: Platte
- 78: Platte
- 80: Positionieröffnung
- 82: Versteifungselement
- 84: Öffnung

## Patentansprüche

1. Befestigungsanordnung (50) mit einem Clipkörper (10), einer Befestigungseinrichtung (14) und einer Platte (18),
- wobei der Clipkörper (10) eine Halterung (12) für die Befestigungseinrichtung (14) sowie mindestens ein Positionierelement (20) aufweist, wobei der Clipkörper (10) an der mit mindestens einer Befestigungsöffnung (16) versehenen Platte (18) befestigbar ist,
- wobei die Platte zusätzlich zu der Befestigungsöffnung eine Positionieröffnung (80) aufweist, so dass durch einen Anschlag des mindestens einen Positionierelementes (20) an einem Rand (22) der Positionieröffnung (80) eine Positionierung des Clipkörpers (10) an der Platte (18) erfolgt,
- wobei die Positionieröffnung (80) eine solche Größe hat, die ein zumindest teilweises Hindurchführen des Clipkörpers (10) mit daran gehalterter Befestigungseinrichtung (14) erlaubt, wobei das Positionierelement (20) zumindest teilweise an dem Rand (22) der Positionieröffnung (80) anliegt, und
- wobei das Positionierelement (20) gleichzeitig ein Arretierelement oder mit einem solchen verbunden ist, das die Platte an einer der Halterung (12) abgewandten Seite kontaktiert, und das Arretierelement der Halterung (12) gegenüberliegend angeordnet ist,
**dadurch gekennzeichnet, dass** der Clipkörper (10) mindestens eine Rippe als Versteifungselement (82) aufweist, die dem Clipkörper beim Komplettieren der Befestigungseinrichtung zusätzliche Stabilität verleiht, indem sie seine Anlage an der Platte aufrechterhält.

2. Befestigungsanordnung (50) nach Anspruch 1, **dadurch gekennzeichnet, dass** die Platte (18) im Innenbereich eines Fahrzeugs oder Flugzeugs angeordnet ist.

3. Clipkörper (10) für eine Befestigungsanordnung (50) nach einem der vorhergehenden Ansprüche.

4. Clipkörper (10) nach Anspruch 3, **dadurch gekennzeichnet, dass** das Arretierelement mindestens eine Zunge (24) aufweist.

5. Clipkörper (10) nach einem der Ansprüche 3 bis 4, **dadurch gekennzeichnet, dass** der Clipkörper (10) aus einem isolierenden Material und/oder einem Material hergestellt ist, das Kontaktkorrosion verhindert.

6. Clipkörper (10) nach einem der Ansprüche 3 bis 5, **dadurch gekennzeichnet, dass** der Clipkörper (10) aus Kunststoff besteht.

7. Clipkörper (10) nach einem der Ansprüche 3 bis 6, **dadurch gekennzeichnet, dass** an dem Clipkörper (10) mindestens ein Dichtungselement (26, 28) angebracht ist.

8. Clip (30) mit einem Clipkörper (10) nach einem der Ansprüche 3 bis 7 und mit einer Befestigungseinrichtung (14).

9. Clip (30) nach Anspruch 8, **dadurch gekennzeichnet, dass** die Befestigungseinrichtung (14) zumindest teilweise bolzenartig ist.

10. Clip (30) nach Anspruch 8 oder 9, **dadurch gekennzeichnet, dass** die Befestigungseinrichtung (14) einen Haltenocken (32) und einen Pin (34) umfasst.

11. Clip (30) nach Anspruch 8 oder 9, **dadurch gekennzeichnet, dass** die Befestigungseinrichtung (14) eine Mutter (36) und eine Schraube (38) umfasst.

12. Clip (30) nach Anspruch 8 oder 9, **dadurch gekennzeichnet, dass** die Befestigungseinrichtung (14) einen Federclip (40) und einen Pin (42) umfasst.

13. Clip (30) nach Anspruch 8 oder 9, **dadurch gekennzeichnet, dass** die Befestigungseinrichtung (14) eine Kegelmutter (44) und eine Schraube (46) umfasst.

14. Clip (30) nach einem der Ansprüche 8 bis 13, **dadurch gekennzeichnet, dass** die Befestigungseinrichtung (14) in der Halterung (12) in mindestens einer Richtung parallel zu der Platte (18) mit Spiel gehalten ist.

## Claims

1. A fastening arrangement (50), comprising a clip body (10), a fastening device (14) and a panel (18),
- wherein the clip body (10) has a retainer (12) for the fastening device (14) and at least one positioning element (20), wherein the clip body (10) can be fastened to the panel (18) which is provided with at least one fastening opening (16),
- wherein the panel has a positioning opening (80) in addition to the fastening opening so that positioning the clip body (10) on the panel (18) takes place by the at least one positioning element (20) abutting against an edge (22) of the positioning opening (80),
- wherein the positioning opening (80) has a size which allows the clip body (10) with the fastening device (14) retained thereon to be passed at least partially therethrough, the positioning element (20) bearing at least partially against the edge (22) of the positioning opening (80),
- wherein the positioning element (20) at the same time comprises or is connected to a locking element which makes contact with the panel on a side facing away from the retainer (12) and the locking element is arranged opposite the retainer (12),
**characterized in that** the clip body (10) has at least one rib as a reinforcement element (82) which provides additional stability for the clip body when finishing the fastening device by maintaining the bearing thereof against the panel.

2. The fastening arrangement (50) according to claim 1, **characterized in that** the panel (18) is arranged in the interior of a vehicle or an aircraft.

3. A clip body (10) for a fastening arrangement (50) according to any one of the preceding claims.

4. The clip body (10) according to claim 3, **characterized in that** the locking element has at least one tongue (24).

5. The clip body (10) according to any one of claims 3 to 4, **characterized in that** the clip body (10) is made from an insulating material and/or from a material which prevents contact corrosion.

6. The clip body (10) according to any one of claims 3 to 5, **characterized in that** the clip body (10) consists of plastic.

7. The clip body (10) according to any one of claims 3 to 6, **characterized in that** at least one sealing element (26, 28) is attached to the clip body (10).

8. A clip (30) comprising a clip body (10) according to any one of claims 3 to 7 and a fastening device (14) .

9. The clip (30) according to claim 8, **characterized in that** the fastening device (14) is at least partially bolt-shaped.

10. The clip (30) according to claim 8 or 9, **characterized in that** the fastening device (14) comprises a holding cam (32) and a pin (34).

11. The clip (30) according to claim 8 or 9, **characterized in that** the fastening device (14) comprises a nut (36) and a screw (38).

12. The clip (30) according to claim 8 or 9, **characterized in that** the fastening device (14) comprises a spring clip (40) and a pin (42).

13. The clip (30) according to claim 8 or 9, **characterized in that** the fastening device (14) comprises a taper nut (44) and a screw (46).

14. The clip (30) according to any one of claims 8 to 13, **characterized in that** the fastening device (14) is held in the retainer (12) with play in at least one direction parallel to the panel (18).

## Revendications

1. Système de fixation (50) avec un corps de pince (10), un dispositif de fixation (14) et une plaque (18),
- sachant que le corps de pince (10) comporte un support (12) pour le dispositif de fixation (14) ainsi qu'au moins un élément de positionnement (20), sachant que le corps de pince (10) peut être fixé à au moins une plaque (18) dotée d'une ouverture de fixation (16),
- sachant que la plaque comporte en plus de l'ouverture de fixation, une ouverture de positionnement (80) de telle manière qu'un positionnement du corps de pince (10) sur la plaque (18) a lieu par une butée d'au moins un élément de positionnement (20) sur un bord (22) de l'ouverture de positionnement (80),
- sachant que l'ouverture de positionnement (80) possède une taille telle qu'elle permet un passage au moins en partie du corps de pince (10) avec le dispositif de fixation (14) maintenu sur celui-ci, sachant que l'élément de positionnement (20) vient au moins en partie se juxtaposer au bord (22) de l'ouverture de positionnement (80), et
- sachant que l'élément de positionnement (20) est simultanément relié à un élément de blocage ou à un élément analogue qui met en contact la plaque sur un côté opposé au support (12) et l'élément de blocage est disposé opposé au support (12),
**caractérisé en ce que** le corps de pince (10) comporte au moins une membrure en tant qu'élément de rigidification (82) qui confère au corps de pince une stabilité supplémentaire lors de la complétion du dispositif de fixation dans laquelle il conserve son appui sur la plaque.

2. Système de fixation (50) selon la revendication 1, **caractérisé en ce que** la plaque (18) est disposée dans une zone intérieure d'un véhicule ou d'un avion.

3. Corps de pince (10) pour un système de fixation (50) selon l'une quelconque des revendications précédentes.

4. Corps de pince (10) selon la revendication 3, **caractérisé en ce que** l'élément de blocage comporte au moins une languette (24).

5. Corps de pince (10) selon l'une quelconque des revendications 3 à 4, **caractérisé en ce que** le corps de pince (10) est fabriqué dans un matériau isolant et/ou un matériau qui évite la corrosion par contact.

6. Corps de pince (10) selon l'une quelconque des revendications 3 à 5, **caractérisé en ce que** le corps de pince (10) est composé de matière plastique.

7. Corps de pince (10) selon l'une quelconque des revendications 3 à 6, **caractérisé en ce qu'**au moins un élément d'étanchéité (26, 28) est monté sur le corps de pince (10).

8. Pince (30) avec un corps de pince (10) selon l'une quelconque des revendications 3 à 7 et avec un dispositif de fixation (14).

9. Pince (30) selon la revendication 8, **caractérisée en ce que** le dispositif de fixation (14) est au moins en partie de type boulon.

10. Pince (30) selon la revendication 8 ou 9, **caractérisée en ce que** le dispositif de fixation (14) comprend une came de retenue (32) et un axe (34) .

11. Pince (30) selon la revendication 8 ou 9, **caractérisée en ce que** le dispositif de fixation (14) comprend un écrou (36) et une vis (38).

12. Pince (30) selon la revendication 8 ou 9, **caractérisée en ce que** le dispositif de fixation (14) comprend une pince à ressort (40) et un axe (42) .

13. Pince (30) selon la revendication 8 ou 9, **caractérisée en ce que** le dispositif de fixation (14) comprend un écrou conique (44) et une vis (46) .

14. Pince (30) selon l'une quelconque des revendications 8 à 13, **caractérisée en ce que** le dispositif de fixation (14) est maintenu dans le support (12) avec du jeu dans au moins une direction parallèlement à la plaque (18).
